# EUROPEAN PATENT SPECIFICATION

(11) **EP 1 797 358 B1**
(45) Date of publication and mention of the grant of the patent: **09.01.2008**
(21) Application number: 04787601.6
(22) Date of filing: 20.09.2004
(51) Int. Cl.: F16J 1/18, F16J 1/16, F04B 53/14, F04B 39/00

(54) **RECIPROCATING MACHINE**
HUBKOLBENMASCHINE
MACHINE À MOUVEMENT ALTERNATIF

(43) Date of publication of application: 20.06.2007
(73) Proprietor: EMBRACO EUROPE S.r.l., 10121 Torino (IT)
(72) Inventor: BO, Giuseppe, I-10086 Rivarolo Canavese (Torino) (IT); KAKALEJCIK, Jan, 05201 Spisska Nova Ves (SK)
(74) Representative: Gerbino, Angelo
(86) International application number: PCT/IT2004/000511
(87) International publication number: WO 2006/033121

(56) References cited:
- DE-C1- 19 511 997
- US-A- 2 193 684
- US-A- 2 910 826
- US-A- 3 358 657
- US-A- 5 653 204

## Description

The present invention relates to a reciprocating machine, in particular a compressor for refrigerating equipment.

In more detail, such a machine comprises:
- a piston which moves in translation inside a cylinder and which is provided with a gudgeon pin arranged transversely with respect to the direction of translation of the piston,
- a connecting rod comprising a small end, a shaft and a big end, the small end defining an eye inside which is arranged the gudgeon pin and the shaft having a longitudinal channel suitable for permitting the flow of a lubricating fluid, and
- connecting means for connecting the connecting rod to the gudgeon pin.

A reciprocating machine having the thechnical features defined in the preamble of claim 1 is known from US Patent 2,193,684.

The object of the present invention is to provide a reciprocating machine of the type indicated above in which the transmission of forces between the components which are from time to time driving and driven in accordance with the various stages of operation is facilitated.

That object is achieved by means of a reciprocating machine which has the features indicated at the beginning of the present description and wherein the above-mentioned small end comprises at least one proximal portion adjacent to the shaft and a distal portion having a thickness smaller than that of the proximal portion and which is characterized in that the above-mentioned connecting means for connecting the connecting rod to the gudgeon pin are arranged inside the distal end of the longitudinal channel of the shaft and a hole, which is inside the gudgeon pin and which is oriented transversely with respect to the longitudinal axis of the gudgeon pin, and are hollow in order not to block the flow of lubricating fluid.

Compared with a conventional machine in which the thickness of the connecting rod small end remains constant, the machine according to the invention enables the extension of the areas of contact between its various components to be optimised. Owing to the reduction in the thickness of the distal portion of the connecting rod small end, for the surfaces of the gudgeon pin that are diametrically opposed with respect to the direction identified by the shaft, the ratio of the areas in contact with the piston to those in contact with the connecting rod small end varies. In particular, the surface of the gudgeon pin closest to the shaft has a ratio of the area of contract with the connecting rod to the area of contact with the piston which is greater than the analogous ratio of the surface of the gudgeon pin furthest away from the shaft. This permits improved transmission of the forces in the various stages of operation of the reciprocating machine owing to the reduction in pressure due to the increase in the area of contact between the parts which are driving and driven, respectively. It is the surface of the gudgeon pin closest to the shaft which is pushed by the connecting rod during the compression stroke and, conversely, it is the surface of the gudgeon pin furthest away from the shaft which is pushed by the piston during the intake stroke.

Further advantages and features of the present invention will become clear from the following detailed description which is given by way of non-limiting example with reference to the appended drawings, in which:
Figure 1 is a front view of a reciprocating machine according to the invention,
Figure 2 is a sectioned view of the reciprocating machine of Figure 1,
Figure 3 is a perspective split view of some components of the reciprocating machine of the previous Figures,
Figure 4 is a perspective split view of further components of the reciprocating machine of the previous Figures, and
Figure 5 is a sectioned view taken on the line V-V of Figure 2.

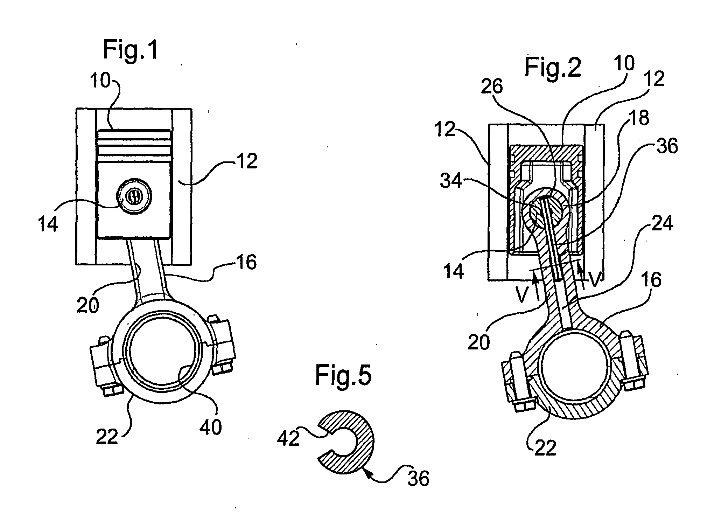

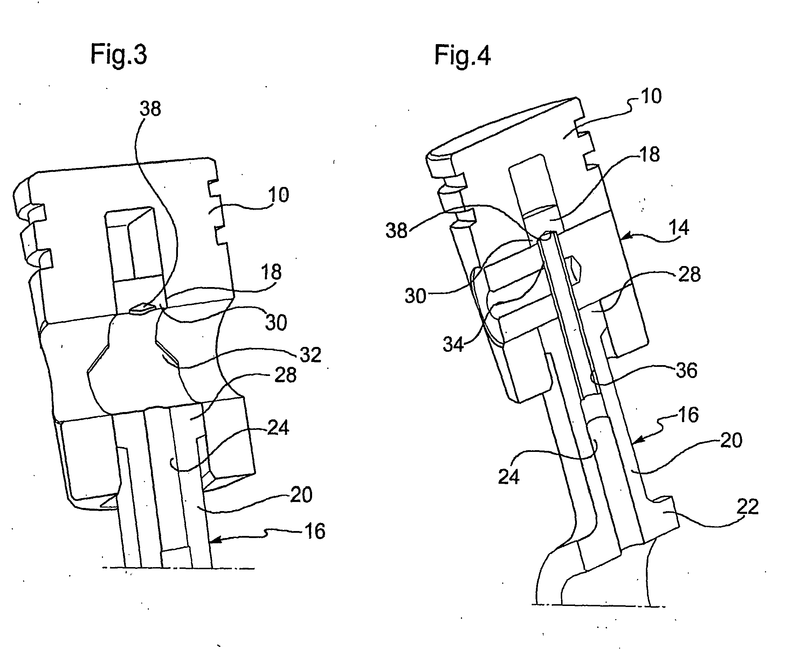

A reciprocating machine, in particular a compressor for refrigerating equipment, comprises (Figures 1 and 2) a piston 10 which moves in translation inside a cylinder 12 and which is provided with a gudgeon pin 14 arranged transversely with respect to the direction of translation of the piston 10.

The gudgeon pin 14 is connected in a manner which will be described in detail hereinafter to a connecting rod 16 comprising a small end 18, a shaft 20 and a big end 22. The shaft 20 has a longitudinal channel 24 suitable for the flow of a lubricating fluid, while the small end 18 defines a small eye 26 housing the gudgeon pin 14 and comprises (Figures 3 and 4) a proximal portion 28 adjacent to the shaft 20 and a distal portion 30 having a thickness smaller than that of the proximal portion 28. The proximal portion 28 and the distal portion 30 of the small end 18 are connected by an intermediate portion 32 having a cross-section tapering towards the distal portion 30.

The connecting rod 16 is connected to the gudgeon pin 14 by connecting means arranged with interference inside the distal end of the longitudinal channel 24 of the shaft 20 and a hole 34 which is inside the gudgeon pin 14 and which is oriented transversely with respect to the longitudinal axis thereof. The connecting means are produced in the form of a resilient tubular peg 36 split along the longitudinal axis (Figure 5). The distal end of the peg 36 is inserted (Figure 4) in a cavity 38 formed in the internal surface of the small end 18 of the connecting rod 16 in a position diametrically opposite the point of attachment of the shaft 20.

Owing to the variation in the thickness of the various portions of the small end 18 of the connecting rod 16, for the surfaces of the gudgeon pin 14 that are diametrically opposed with respect to the direction identified by the shaft 20, the ratio of the areas in contact with the piston 10 to the areas in contact with the small end 18 of the connecting rod 16 (Figure 4) changes. In particular, that ratio is greater for the surface of the gudgeon pin 14 furthest away from the shaft 20, thus optimising the transmission of forces in the various stages of operation of the reciprocating machine.

For its part, the provision of hollow connecting means for connecting the connecting rod 16 to the gudgeon pin 14 does not hinder the flow of lubricating oil which, coming from the eccentric of the crankshaft arranged in the large eye 40 of the big end 22 of the connecting rod 16, can pass through the entire channel 24 formed through the shaft 20 of the connecting rod 16 and can exit from the longitudinal split 42 in the peg 36 at the location of the gudgeon pin 14, to lubricate those portions of the gudgeon pin 14, the piston 10 and the cylinder 12 that are in sliding contact.

Naturally, the principle of the invention remaining the same, the details of construction and forms of embodiment may be varied widely with respect to those described purely by way of example, without thereby departing from the scope thereof.

## Claims

1. A reciprocating machine, in particular a compressor for refrigerating equipment, comprising:
- a piston (10) which moves in translation inside a cylinder (12) and which is provided with a gudgeon pin (14) arranged transversely with respect to the direction of translation of the piston (10),
- a connecting rod (16) comprising a small end (18), a shaft (20) and a big end (22), the small end (18) defining an eye (26) inside which is arranged the gudgeon pin (14) and the shaft (20) having a longitudinal channel (24) suitable for permitting the flow of a lubricating fluid, and
- connecting means for connecting the connecting rod (16) to the gudgeon pin (14),
wherein the small end (18) comprises at least one proximal portion (28) adjacent to the shaft (20) and a distal portion (30) having a thickness smaller than that of the proximal portion (28), the machine being **characterized in that** the connecting means for connecting the connecting rod (16) to the gudgeon pin (14) are arranged inside the distal end of the longitudinal channel (24) of the shaft (20) and a hole (34), which is inside the gudgeon pin (14) and which is oriented transversely with respect to the longitudinal axis of the gudgeon pin (14), and **in that** the connecting means are hollow in order not to block the flow of lubricating fluid.

2. A reciprocating machine according to claim 1, **characterized in that** the distal portion (30) and the proximal portion (28) of the small end (18) are connected by an intermediate portion having a cross-section tapering towards the distal portion (30).

3. A reciprocating machine according to either of the preceding claims, **characterized in that** the connecting means are produced in the form of a resilient tubular peg (36) which is split along the longitudinal axis and which is arranged with interference inside the distal end of the longitudinal channel (24) of the shaft (20) and the transverse hole (34) of the gudgeon pin (14).

4. A reciprocating machine according to claim 3, **characterized in that** the distal end of the peg (36) is inserted in a cavity (38) formed in the internal surface of the small end (18) of the connecting rod (16) in a position diametrically opposite the point of attachment of the shaft (20).

## Patentansprüche

1. Hubkolbenmaschine, insbesondere ein Kompressor für eine Kühleinrichtung, umfassend:
- einen Kolben (10), der sich im Inneren eines Zylinders (12) mit Parallelverschiebung bewegt und mit einem Kolbenbolzen (14) versehen ist, der in Bezug auf die Verschiebungsrichtung des Kolbens (10) quer angeordnet ist,
- eine Pleuelstange (16), die einen Pleuelkopf (18), einen Schaft (20) und einen Pleuelfuß (22) umfasst, wobei der Pleuelkopf (18) eine Öse (26) definiert, in deren Innerem der Kolbenbolzen (14) angeordnet ist, und der Schaft (20) einen Längskanal (24) aufweist, der dazu geeignet ist, das Strömen einer Schmierflüssigkeit zu ermöglichen, und
- Verbindungsmittel zum Verbinden der Pleuelstange (16) mit dem Kolbenbolzen (14),
wobei der Pleuelkopf (18) zumindest einen am Schaft (20) angrenzenden proximalen Abschnitt (28) und einen distalen Abschnitt (30) umfasst, der eine Dicke aufweist, die geringer als jene des proximalen Abschnitts (28) ist, wobei die Maschine **dadurch gekennzeichnet ist, dass** die Verbindungsmittel zum Verbinden der Pleuelstange (16) mit dem Kolbenbolzen (14) innerhalb des distalen Endes des Längskanals (24) des Schafts (20) und eines Lochs (34) angeordnet sind, das sich im Inneren des Kolbenbolzens (14) befindet und in Bezug auf die Längsachse des Kolbenbolzens (14) quer ausgerichtet ist, und dass die Verbindungsmittel hohl sind, um den Strom von Schmierflüssigkeit nicht zu blockieren.

2. Hubkolbenmaschine gemäß Anspruch 1, **dadurch gekennzeichnet, dass** der distale Abschnitt (30) und der proximale Abschnitt (28) des Pleuelkopfs (18) durch einen Zwischenabschnitt verbunden sind, der einen zum distalen Abschnitt (30) hin spitz zulaufenden Querschnitt aufweist.

3. Hubkolbenmaschine gemäß einem der vorhergehenden Ansprüche, **dadurch gekennzeichnet, dass** die Verbindungsmittel in Form eines elastischen röhrenförmigen Zapfens (36) hergestellt sind, der entlang der Längsachse gespalten und mit einer Interferenz innerhalb des distalen Endes des Längskanals (24) des Schafts (20) und des Querlochs (34) des Kolbenbolzens (14) angeordnet ist.

4. Hubkolbenmaschine gemäß Anspruch 3, **dadurch gekennzeichnet, dass** das distale Ende des Zapfens (36) in einem Hohlraum (38) eingesetzt ist, welcher in der Innenfläche des Pleuelkopfs (18) der Pleuelstange (16) in einer der Befestigungsstelle des Schafts (20) diametral entgegengesetzten Position gebildet ist.

## Revendications

1. Machine à mouvement alternatif, en particulier compresseur pour du matériel frigorifique, comprenant :
- un piston (10) qui se déplace en translation à l'intérieur d'un cylindre (12) et qui est muni d'un axe de piston (14) agencé transversalement par rapport à la direction de translation du piston (10),
- une bielle (16) comprenant un pied de bielle (18), un arbre (20) et une tête de bielle (22), le pied de bielle (18) définissant un oeillard (26) à l'intérieur duquel sont agencés l'axe de piston (14) et l'arbre (20) ayant un canal longitudinal (24) approprié pour permettre l'écoulement d'un fluide de lubrification, et
- des moyens de connexion destinés à connecter la bielle (16) à l'axe de piston (14),
dans laquelle le pied de bielle (18) comprend au moins une partie proximale (28) adjacente par rapport à l'arbre (20) et une partie distale (30) ayant une épaisseur inférieure à celle de la partie proximale (28), la machine étant **caractérisée en ce que** les moyens de connexion destinés à connecter la bielle (16) à l'axe de piston (14) sont agencés à l'intérieur de l'extrémité distale du canal longitudinal (24) de l'arbre (20) et d'un trou (34), qui se situe à l'intérieur de l'axe de piston (14) et qui est orienté transversalement par rapport à l'axe longitudinal de l'axe de piston (14), et **en ce que** les moyens de connexion sont creux afin de ne pas bloquer l'écoulement du fluide de lubrification.

2. Machine à mouvement alternatif selon la revendication 1, **caractérisée en ce que** la partie distale (30) et la partie proximale (28) du pied de bielle (18) sont connectées grâce à une partie intermédiaire ayant une coupe transversale effilée vers la partie distale (30).

3. Machine à mouvement alternatif selon l'une quelconque des revendications précédentes, **caractérisée en ce que** les moyens de connexion sont produits sous la forme d'une cheville tubulaire élastique (36) qui est divisée le long de l'axe longitudinal et qui est agencée avec interférence à l'intérieur de l'extrémité distale du canal longitudinal (24) de l'arbre (20) et du trou transversal (34) de l'axe de piston (14).

4. Machine à mouvement alternatif selon la revendication 3, **caractérisée en ce que** l'extrémité distale de la cheville (36) est introduite dans une cavité (38) formée dans la surface interne du pied de bielle (18) de la bielle (16) dans une position diamétralement opposée au point de fixation de l'arbre (20).
